# EUROPEAN PATENT APPLICATION

(11) **EP 1 532 867 A1**
(43) Date of publication of application: **25.05.2005**
(21) Application number: 03741170.9
(22) Date of filing: 02.07.2003
(51) Int. Cl.: A23L 1/20, A23L 1/32, A23L 1/24

(54) **VISCOUS FOOD CONTAINING SOYBEAN, TOFU-LIKE BASIC FOOD MATERIAL AND PROCESS FOR PRODUCING THE SAME**

(30) Priority: 05.07.2002 JP 2002197956; 10.06.2003 JP 2002165675
(71) Applicant: Shimazaki, Yasutaka, Ichinomiya-shi, Aichi 491-0121 (JP)
(72) Inventor: SHIMAZAKI, Yasutaka, Ichinomiya-shi, Aichi 491-0121 (JP); OMORI, Koichi, Ichinomiya-shi, Aichi 491-0035 (JP)
(74) Representative: Thinat, Michel
(86) International application number: PCT/JP2003/008451
(87) International publication number: WO 2004/004488

(57) **Abstract**

A viscous food containing soybean is a mayonnaise-type food which resembles mayonnaise in flavor, appearance and intended use, and is produced by mixing a tofu-like basic food material obtained by using water and soybean powder as raw materials with egg yolk, grapeseed oil, wine vinegar, pepper, mustard, and salt in a predetermined mixing ratio.

## Description

### TECHNICAL FIELD

The present invention relates to a viscous food containing soybean using soybean as a raw material and a tofu-like basic food material, and a process for producing the same.

### BACKGROUND ART

Traditionally, soybean has been used as a food material having an excellent characteristic in processing properties. Also, in recent years, as information on a wide range of nutritive and biological defense functions of proteins, lipids, dietary fiber, saccharides, vitamins, minerals, etc. contained in soybean has been accumulated, it has been shown that soybean is a rich source of health factors. For this reason, since nowadays life-habit related diseases and arrival of an elderly society are becoming a serious problem, interest in soybean as a health food has increased rapidly. By the way, soybean has been provided in daily meals as a traditional processed food such as tofu, particularly in Japan and its neighboring East Asian countries. Tofu is usually produced according to the following procedure: preparation of soybean juice by grinding soybean soaked in water, separation by pressing and filtering of the soybean juice to soy milk and pomace that is filtered lees of the soybean juice (hereinafter referred to as okara), and forming of tofu by adding a coagulant while heating soy milk only.

However, in the countries other than those mentioned above, namely, Japan and its neighboring East Asian countries, a major use of soybean has been for vegetable oil manufacturing, and defatted soybean produced as a byproduct of the oil manufacturing has been used only as a feed. That is, from the point of a global perspective, soybean is still regarded as a feed, and the volume of soybean intake as a processed soybean food containing soybean proteins, etc. has been extremely small. Also, even in Japan where processed soybean foods are relatively abundant, since many kinds of processed soybean food are tended to be served with a limited variety, and also due to westernization of eating habit, the amount of dietary intake of the processed soybean food by Japanese, particularly by young generation, has been tended to decrease.

In addition, in many of the processed soybean foods, there were cases where health-promoting components of soybean are lost in the manufacturing process. In the case of the above-mentioned tofu, the components which are transferred to okara are not contained in tofu, which results in an inefficient use of the nutritive value of soybean. In particular, most of dietary fiber is transferred to okara. Therefore, tofu does not contain most of the dietary fiber which is increasingly recognized as being effective in improving lipid metabolism, preventing colorectal cancer, improving diabetes, etc. Further, isoflavone contained in soybean as a glucoside component has an estrogen effect, and is effective in prevention of cancer, osteoporosis, etc. Likewise, saponin is effective in improving lipid metabolism, antioxidative effect, etc. So far, however, because these glycosyl components have a disagreeable taste with astringency, a treatment method of removing hypocotyl, an unheated squeeze processing, etc. have been discussed to positively reduce their content.

Furthermore, there is also a problem of industrial waste which is generated during a manufacturing process of processed soybean foods. As a specific example, there is okara produced in the tofu manufacturing process mentioned above. Although okara contains much of soybean components and is recognized as a food with high nutritive value, okara spoils rapidly and gives foul odor because of the high nutritive value, and is currently in large part incinerated due to a delay in the development of okara utilization. Therefore, there are problems from the standpoint of an effective utilization of food resources, and also from the high cost of waste treatment.

As described above, although the understanding of its usefulness has increased, soybean has not so far been provided as a processed food that is easy to be consumed daily in actual dietary menus. Also, there is a problem that processed soybean foods have not been provided in the conditions in which much of the soybean components is contained and its nutritive value is fully exploited. Therefore, it has been expected that the consumption of soybean increases if choices of processed soybean foods expand by providing seasonings and desserts that can be taken daily and include much of original soybean components, in order to have a healthy and rich dietary life.

In view of the above-mentioned situation, an object of the present invention is to provide a viscous food containing soybean and a tofu-like basic food material that contain much of the original soybean components and are useful to make dietary life healthy and rich, and a process for producing the same.

### DISCLOSURE OF THE INVENTION

A viscous food containing soybean according to the present invention is produced by mixing, in a predetermined mixing ratio, a tofu-like basic food material made from raw materials composed of at least water and soybean with at least egg and edible fat and oil.

Here, the tofu-like basic food material preferably uses at least water and soybean as raw materials, and takes a form of cream. Specifically, the tofu-like basic food material includes a food material produced by first preparing soybean juice by grinding soybean soaked in water, then separating the soybean juice to a soybean liquid and pomace that is filtered lees of the soybean juice (hereinafter referred to as okara) by pressing and filtering the soybean juice, and finally forming the food material by adding a coagulant to the soybean liquid, or a food material produced by adding a coagulant to a soybean liquid which is a water suspension composed of whole soybean powder, dried soy milk powder, defatted soybean powder, concentrated soybean proteins, isolated soybean proteins, etc. Further, the tofu-like basic food materials are not limited to those produced by the methods described above, and include also those produced by simply mixing commercially available rough-grained tofu, fine-grained tofu, packed tofu, etc.

The coagulants used inproducing the above-mentioned tofu-like basic food materials include, for example, bittern composed of magnesium chloride as the main component, magnesium chloride, calcium chloride, magnesium sulfate, calcium sulfate, glucono delta lactone, calcium lactate, organic acids etc., which are used either singly or in a combination of a plurality thereof. However, bittern is used most preferably from the point of handling, cost and taste. In addition, the amount used relative to the soybean liquid is preferably approximately in the range from 0.01 to 20% by mass, and more preferably approximately in the range from 0.2 to 0.7% by mass. It is possible to adjust a time needed to coagulate the soybean liquid and hardness of the tofu-like basic food material by controlling the amount used.

Here, edible fat and oil include, for example, vegetable oil such as grapeseed oil, olive oil, palm oil, palm kernel oil, coconut oil, rapeseed oil, soybean oil, corn oil, rice oil (rice bran oil), sunflower oil, safflower oil, sesame oil, cottonseed oil, and the like, and animal oil and fat such as milk fat, beef tallow, lard, fish oil, and the like.

The mixing ratio among the tofu-like basic food material, egg and edible fat and oil is not specifically limited, but can be adjusted with an appropriate selection depending on the desired food.

Therefore, according to the viscous food containing soybean of the present invention, it is possible to produce an emulsified food consisting of an aqueous phase composed of the tofu-like basic food material containing soybean components and egg, and an oil phase composed of edible fat and oil, by making use of an emulsifying function of lecithin contained in egg yolk or soybean.

A viscous food containing soybean according to the present invention is produced by mixing, in a predetermined mixing ratio, a tofu-like basic food material made from raw materials composed of at least water and soybean with egg yolk, edible fat and oil, acidulant, spice, and salt.

Here, acidulant includes fermented vinegar prepared by acetic acid fermentation of grains such as rice or fruits as raw materials, synthetic vinegar prepared by diluting acetic acid and adding fermented vinegar to the diluted acetic acid, fruit juice having acidic taste obtained from citrus fruits such as lemon, etc. Also, spice includes, for example, pepper, mustard, etc.

Here, the mixing ratio among the tofu-like basic food material, egg yolk, edible fat and oil, acidulant, spice, and salt is not specifically limited, but can be adjusted with an appropriate selection depending on the desired viscous food containing soybean. However, the mixing ratio is preferably in the range of about 50 to 90% by mass of the tofu-like basic food material and about 0.01 to 40% by mass of edible fat and oil, more preferably in the range of about 60 to 90% by mass of the tofu-like basic good material and about 0.01 to 30% by mass of edible fat and oil, and most preferably in the range of 70 to 90% by mass of the tofu-like basic good material and about 0.01 to 20% by mass of edible fat and oil. Thus, the higher the mixing ratio of the tofu-like basic food material, the higher the amount of the original soybean components is included in the viscous food containing soybean.

Therefore, according to the viscous food containing soybean of the present invention, it is possible to produce a mayonnaise-type food consisting of an aqueous phase composed of the tofu-like basic food material containing soybean components, egg yolk, acidulants, spices, and salt, and an oil phase composed of edible fat and oil, by making use of an emulsifying function of lecithin contained in egg yolk or soybean. Also, it is possible to produce a mayonnaise-type food having the tofu-like basic food material as the main component with the highest mixing ratio, and also keeping the mixing ratio of edible fat and oil at a comparatively reduced level.

In addition, "the mayonnaise-type food" in the present specification refers to a food of which flavor, appearance and intended use are similar to those of "mayonnaise" specified in Japanese Agricultural Standards. The "mayonnaise" specified in Japanese Agricultural Standard refers to one of semi-solid dressings wherein the semi-solid dressing contains 65% by mass or more of fat and oil, uses egg yolk or whole egg, and does not contain raw materials other than the essential raw materials (edible fat and oil and vinegar), egg yolk, egg white, protein hydrolysate, salt, saccharide, spice, seasoning (amino acids and the like), and acidulant.

A viscous food containing soybean according to the present invention is produced by mixing, in a predetermined mixing ratio, a tofu-like basic food material made from raw materials composed of at least water and soybean with egg white, edible fat and oil, fruit juice, and saccharides.

Here, the fruit juice includes, for example, juice obtained from citrus fruits such as lemon, and the like. Also, the saccharides include, for example, sugar, glucose, fructose, and the like.

The mixing ratio of the tofu-like basic food material, egg white, edible fat and oil, fruit juice, and saccharides is not specifically limited, but can be adjusted with an appropriate selection depending on the desired viscous food containing soybean. However, the mixing ratio is preferably in the range of about 50 to 90% by mass of the tofu-like basic food material and about 0.01 to 40% by mass of edible fat and oil, more preferably in the range of about 60 to 90% by mass of the tofu-like basic good material and about 0.01 to 30% by mass of edible fat and oil, and most preferably in the range of 70 to 90% by mass of the tofu-like basic good material and about 0.01 to 20% by mass of edible fat and oil. Thus, the higher the mixing ratio of the tofu-like basic food material, the higher the amount of the original soybean components is included in the viscous food containing soybean.

Therefore, according to the viscous food containing soybean of the present invention, it is possible to produce a yoghurt-type food consisting of an aqueous phase composed of the tofu-like basic food material containing soybean components, egg white, fruit juice, and saccharide, and an oil phase composed of edible fat and oil, by making use of an emulsifying function of lecithin contained in soybean. Also, it is possible to produce a yoghurt-type food having the tofu-like basic food material as the main component with the highest mixing ratio, and also keeping the mixing ratio of edible fat and oil at a comparatively reduced level. In addition, the yoghurt-type food according to the present specification refers to a food of which flavor, appearance and intended use are similar to those of "yoghurt" produced by fermenting cow milk, etc. using lactic acid bacteria.

A viscous food containing soybean according to the present invention is produced by mixing, in a predetermined mixing ratio, at least egg and edible fat and oil with a soybean liquid prepared by stirring soybean powder with water, wherein the soybean powder is obtained by grinding soybean into powder drying and removing the shell.

Here, the soybean liquid refers to a soybean liquid prepared without producing okara, and is different from soy milk and the like obtained by a conventional manufacturing method. The soybean powder is composed of components that are substantially the same as those of soybean, and is different from dried soy milk powder, defatted soybean powder, concentrated soybean proteins, separated soybean proteins, or the like. The grain size of the soybean powder is not specifically limited, but is preferably in the range from 1 to 100 µm, and more preferably in the range from 10 to 20 µm. The viscosity of the soybean liquid can be adjusted by controlling the mass ratio of water to the soybean powder. Also, the viscosity can be adjusted by adding a thickener such as dextrine, xanthan gum, agar, etc.

Here, the mixing ratio among the soybean liquid, egg, and edible fat and oil is not specifically limited, but can be adjusted with an appropriate selection depending on the desired food.

Therefore, according to the viscous food containing soybean of the present invention, it is possible to produce an emulsified food consisting of an aqueous phase composed of the soybean liquid containing soybean components and egg, and an oil phase composed of edible fat and oil, by making use of an emulsifying function of lecithin contained in egg yolk or soybean. Accordingly, the viscous food containing soybean exhaustively contains proteins, lipids, dietary fiber, saccharides, vitamins, minerals, etc. contained in soybean, since the soybean liquid contains the components that are substantially the same as those of soybean, including trace components

A tofu-like basic food material according to the present invention refers to a tofu-like basic food material used for producing a viscous food containing soybean, and is composed of raw materials including soybean powder and water, wherein the soybean powder is obtained by grinding soybean into powder after drying and removing the shell.

Here, the soybean powder preferably has substantially the same components as those of soybean, and preferably has particularly excellent stability despite containing lipids. Also, the grain size of the soybean powder is not specifically limited but is preferably in the range from 1 to 100 µm, and more preferably in the range from 10 to 20 µm.

Here, the tofu-like basic food material is produced from the raw materials composed of water and soybean powder, by adding a coagulant to a soybean liquid prepared by mixing while stirring the soybean powder with water, without producing okara. Further, in the tofu-like basic food material produced in this manner, the concentration of the solid part can be adjusted by controlling the mixing ratio of the water to soybean powder used as the raw materials, and hence it is possible to control the properties of the tofu-like basic food material in any way. Specifically, the mass ratio of the water to soybean powder to be used as the raw materials is preferably in the range of about 10/1 to 2/1, more preferably in the range of about 8/1 to 4/1, and most preferably about 6/1.

Therefore, according to the tofu-like basic food material of the present invention, the components similar to those of soybean inclusive of trace components are contained in the tofu-like basic food material used in a variety of viscous foods containing soybean. More specifically, it is possible to obtain a tofu-like basic food material containing proteins, lipids, dietary fiber, saccharides, vitamins, minerals, etc. contained in soybean exhaustively. Further, the use of the tofu-like basic food material includes not only a mayonnaise-type food or a yoghurt-type food, but also a curry-like food prepared by mixing curry powder composed of many kinds of spice, and the like with the tofu-like basic food material in a predetermined mixing ratio, for example.

A process for producing a viscous food containing soybean according to the present invention comprises a soybean liquid producing step wherein the soybean liquid is produced by using at least water and soybean, a basic food material producing step wherein the tofu-like basic food material is produced by coagulating the soybean liquid with the addition of a coagulant, and a stirring step wherein at least egg and edible fat and oil are mixed while stirring with the tofu-like basic food material in a predetermined mixing ratio.

Therefore, according to the process for producing the viscous food containing soybean of the present invention, first, a soybean liquid containing soybean proteins etc. is produced from at least water and soybean. Specifically, soybean soaked in water is ground to prepare soybean juice, and the soybean juice is pressed and filtered to produce the soybean liquid. Or, the soybean liquid is produced by dispersing whole soybean powder, dried soy milk powder, defatted soybean powder, concentrated soybean proteins, isolated soybean proteins, or the like, in water. Next, a tofu-like basic food material is produced by adding a coagulant to the obtained soybean liquid. Specifically, the coagulant is added to the soybean liquid to coagulate the soybean liquid, and the coagulated material is put into a form and pressed to squeeze the soybean juice, and after the coagulated material is fully solidified, it is removed from the form to produce the tofu-like basic food material. Or, the tofu-like basic food material is produced by pouring the soybean liquid and the coagulant together to fill up a form, which is then warmed to produce the tofu-like basic food material. Further, to the obtained tofu-like basic food material, at least egg and edible fat and oil are added while stirring to produce an emulsified food consisting of an aqueous phase composed of the tofu-like basic food material and egg, and an oil phase composed of edible fat and oil, by making use of the emulsifying function of lecithin contained in egg yolk or soybean.

A process for producing a viscous food containing soybean according to the present invention comprises a soybean liquid producing step wherein the soybean liquid is produced by using at least water and soybean, a basic food material producing step wherein a tofu-like basic food material is produced by coagulating the soybean liquid with the addition of a coagulant, a first stirring step wherein a first mixture is produced by mixing while stirring egg yolk, spice and salt in a predetermined mixing ratio, a second stirring step wherein a second mixture is produced by mixing while stirring an acidulant with the first mixture in a predetermined mixing ratio, a third stirring step wherein a third mixture having a semi-solid-like state is produced by mixing while stirring edible fat and oil by a small amount at a time with the second mixture in a predetermined mixing ratio, a fourth stirring step wherein a fourth mixture is produced by mixing while stirring the thirdmixture with the tofu-like basic food material in a predetermined mixing ratio, and a fifth stirring step wherein a mayonnaise-type food is produced by mixing while stirring a boiled acidulant with the fourth mixture in a predetermined mixing ratio.

Therefore, according to the process for producing the viscous food containing soybean of the present invention, a tofu-like basic food material is produced first by producing a soybean liquid containing soybean proteins etc. from at least water and soybean, and then by adding a coagulant to the soybean liquid. Then, a first mixture is produced by mixing while stirring egg yolk, spice and salt in a predetermined mixing ratio. Then, a second mixture is produced by mixing while stirring an acidulant with the first mixture in a predetermined mixing ratio. Then, a third mixture having a semi-solid-like state is produced by mixing while stirring edible fat and oil by a small amount at a time with the second mixture in a predetermined mixing ratio. Then, a fourth mixture is produced by mixing while stirring the third mixture with the tofu-like basic food material in a predetermined mixing ratio, wherein the fourth mixture consists of an aqueous phase composed of the tofu-like basic food material, egg yolk, spice, acidulant, and salt, and an oil phase composed of edible fat and oil, by making use of an emulsifying function of lecithin contained in egg yolk or soybean. Further, a mayonnaise-type food is produced by mixing while stirring a boiled acidulant with the fourth mixture in a predetermined mixing ratio.

A process for producing a viscous food containing soybean according to the present invention comprises a soybean liquid producing step wherein the soybean liquid is produced by using at least water and soybean, a basic food material producing step wherein a tofu-like basic food material is produced by coagulating the soybean liquid with the addition of a coagulant, a first stirring step wherein a first mixture is produced by mixing while stirring egg white, edible fat and oil, and fruit juice in a predetermined mixing ratio, a second stirring step wherein a second mixture is produced by mixing while stirring the first mixture with the tofu-like basic food in a predetermined mixing ratio, and a third stirring step wherein a yoghurt-type food is produced by mixing while stirring saccharides with the second mixture in a predetermined mixing ratio.

Therefore, according to the process for producing the viscous food containing soybean of the present invention, a tofu-like basic food material is produced first by producing a soybean liquid containing soybean proteins etc. from at least water and soybean, and then by adding a coagulant to the soybean liquid. Then, a first mixture is produced by mixing while stirring egg white, edible fat and oil, and fruit juice in a predetermined mixing ratio. Also, a second mixture is produced by mixing while stirring the first mixture with the tofu-like basic food in a predetermined mixing ratio, wherein the second mixture consists of an aqueous phase composed of the tofu-like basic food material, egg yolk, and the fruit juice, and an oil phase composed of edible fat and oil, by making use of an emulsifying function of lecithin contained in soybean. Further, a yoghurt-type food is produced by mixing while stirring saccharides with the second mixture in a predetermined mixing ratio.

A process for producing a viscous food containing soybean according to the present invention comprises a soybean powder producing step wherein the soybean powder is produced by grinding soybean after drying and removing the shell, a soybean liquid producing step wherein the soybean liquid is produced by using at least water and the soybean powder, and a stirring step wherein at least egg and edible fat and oil are mixed while mixing with the soybean liquid in a predetermined mixing ratio.

Therefore, according to the process for producing the viscous food containing soybean of the present invention, soybean powder having components that are substantially the same as those of soybean is prepared by grinding soybean after drying and removing the shell. The soybean powder is different from dried soy milk powder, defatted soybean powder, concentrated soybean proteins, separated soybean proteins, or the like. Next, a soybean liquid is produced from at least water and the soybean powder, wherein the soybean liquid contains soybeanproteins etc. Next, a tofu-like basic food material is produced by adding a coagulant to the obtained soybean liquid. Further, an emulsified food is produced by mixing while stirring at least egg and edible fat and oil with the obtained soybean liquid in a predetermined mixing ratio, wherein the emulsified food consists of an aqueous phase composed of the soybean liquid and egg, and an oil phase composed of edible fat and oil, by making use of an emulsifying function of lecithin contained in egg yolk or soybean.

A process for producing a tofu-like basic food material according to the present invention refers to a process for producing a tofu-like basic food material which is used for producing a viscous food containing soybean, and comprises a soybean powder producing step wherein the soybean powder is produced by grinding soybean after drying and removing the shell, a soybean liquid producing step wherein the soybean liquid is produced by using water and the soybean powder, and a basic food material producing step wherein the tofu-like basic food material is produced by coagulating the soybean liquid by adding a coagulant to the soybean liquid.

Therefore, according to the process for producing the tofu-like basic food material of the present invention, first, the soybean powder is produced by grinding soybean after drying and removing the shell, wherein the soybean powder has components that are substantially the same as those of soybean. In this case, a temperature increase due to grinding is observed, causing deterioration of the components contained in soybean and yellowing. However, degradation can be prevented by generating a cool gas flow. Next, the soybean liquid is produced by mixing while stirring water and the soybean powder in a predetermined mixing ratio. By this step, it is possible to obtain the soybean liquid which exhaustively contains proteins, lipids, dietary fiber, saccharides, vitamins, minerals, etc., wherein generation of okara which is industrial wastes can be avoided. Further, the tofu-like basic food material which is used for producing the viscous food containing soybean is produced by coagulating the soybean liquid with the addition of a coagulant. To show a specific example, the soybean liquid is conditioned at about 70 to 90 °C for 3 to 10 minutes, preferably at about 80°C for about 8 minutes, and further the soybean liquid is heated at about 90 to 110°C for 3 to 10 minutes, preferably at about 102°C for about 5 minutes. Then, the heated soybean liquid is cooled to about 30 to 70°C, preferably to about 50°C by using a jacket or the like. Further, the cooled soybean liquid is cooled to about 5 to 10°C, preferably to about 8°C by using a rapid cooler and the like. Next, a coagulant is added to the soybean liquid to coagulate the soybean liquid, and the coagulated material is boiled at about 60 to 100°C for about 30 to 60 minutes, preferably at about 80°C for about 50 minutes. In addition, the boiled material is cooled by using a cooling pond or the like for about 30 to 90 minutes, preferably for about 60 minutes to produce the tofu-like basic food material.

### A BRIEF DESCRIPTION OF THE DRAWINGS

Fig. 1 is a figure to explain the process for producing a tofu-like basic food material for obtaining a viscous food containing soybean according to the first embodiment of the present invention;

Fig. 2 is a schematic diagram to explain the process for producing the tofu-like basic food material for obtaining a viscous food containing soybean according to the first embodiment of the present invention;

Fig. 3 is a figure to explain the process for producing the viscous food containing soybean according to the first embodiment of the present invention: (a) a figure to explain the first stirring step, (b) a figure to explain the second stirring step, (c) a figure to explain the third stirring step, (d) a figure to explain the fourth stirring step, (e) a figure to explain the fifth stirring step, and (f) a figure to explain the viscous food containing soybean;

Fig. 4 is a figure to explain the process for producing the viscous food containing soybean according to the first embodiment of the present invention;

Fig. 5 is a figure to explain the process for producing the viscous food containing soybean according to the second embodiment of the present invention: (a) a figure to explain the first stirring step, (b) a figure to explain the second stirring step, (c) a figure to explain the third stirring step, and (d) a figure to explain the viscous food containing soybean; and

Fig. 6 is a figure to explain the process for producing the viscous food containing soybean according to the second embodiment of the present invention.

### BEST MODE FOR CARRYING OUT THE INVENTION

### The First Embodiment

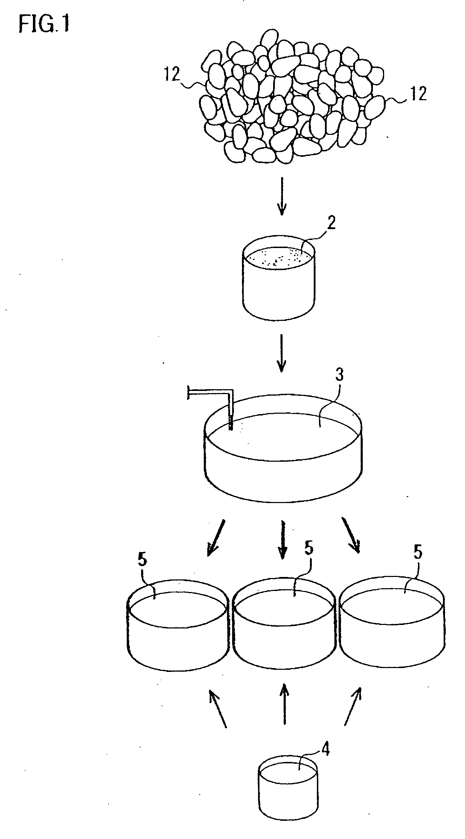

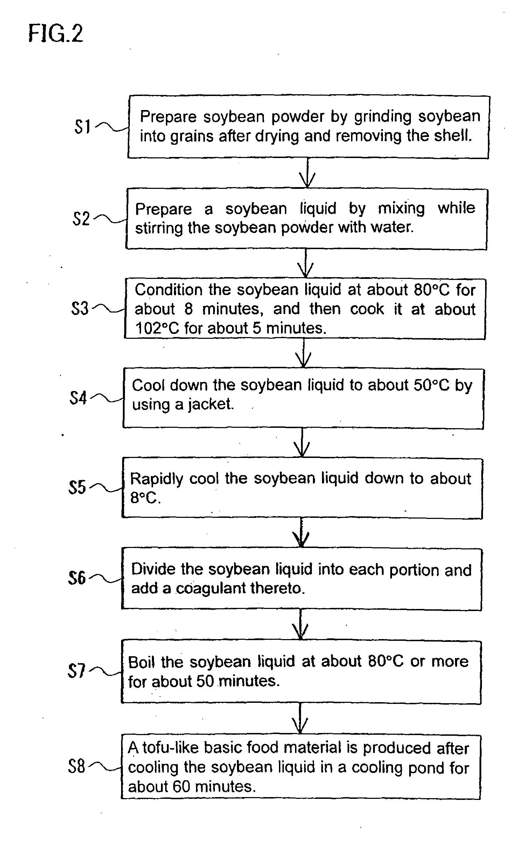

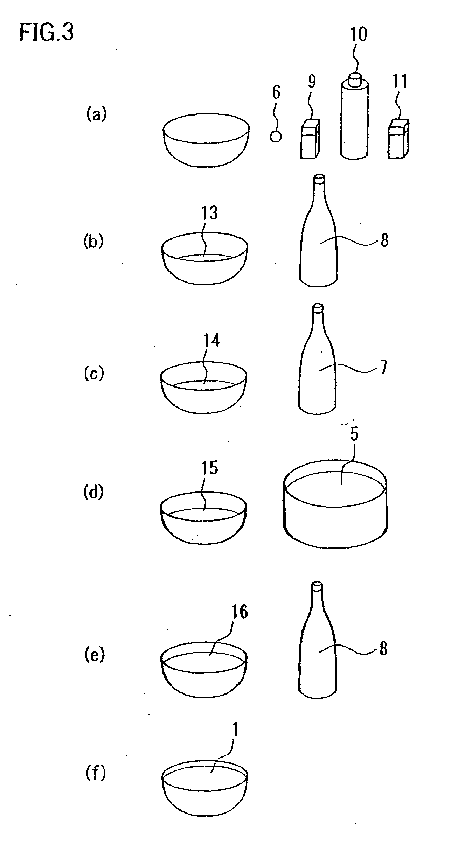

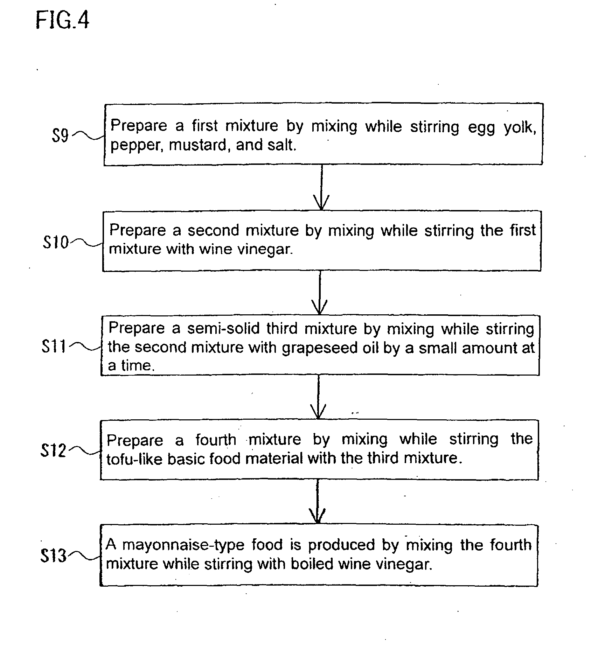

In the following, a viscous food containing soybean according to the first embodiment of the present invention will be explained using Fig. 1 to Fig. 4. Figs. 1 and 2 are figures to explain the process for producing a tofu-like basic food material used for obtaining the viscous food containing soybean according to the first embodiment of the present invention. Figs. 3 and 4 are figures to explain the process for producing the viscous food containing soybean according to the first embodiment of the present invention. The viscous food containing soybean 1 of the present embodiment is produced by mixing egg yolk 6, grapeseed oil 7, wine vinegar 8, pepper 9, mustard 10, and salt 11, in a predetermined mixing ratio, with the tofu-like basic food material 5 produced by adding a coagulant 4 to coagulate a soybean liquid 3 which is prepared by using water and soybean powder 2. Also, the viscous food containing soybean 1 is a mayonnaise-type food which resembles mayonnaise specified in Japanese Agricultural Standards in flavor, appearance and intended use.

The soybean liquid 3, as shown in Fig. 1, uses as a raw material the soybean powder 2 in the form of powder or grains having a size of about 10 to 20 µm, prepared by grinding soybean 12 after drying and removing the shell, and may be a liquid containing at least proteins contained in the soybean 12 or hydrolysates thereof. That is, not only soy milk obtained by boiling a mixture formed by mixing the soybean powder prepared by grinding the soybean 12 after drying and removing the shell with water, but also a soy milk-like liquid obtained by dispersing the whole soybean powder, dried soy milk powder, defatted soybean powder, concentrated soybean proteins, separated soybean proteins, or the like can be used. In addition, in the present embodiment, since the soybean powder 2 was processed from the soybean 12 without removing components contained in soybean such as proteins, dietary fiber, saccharides, vitamins, minerals, etc., the soybean liquid 3 contains dietary fiber, phospholipid lecithin, glucoside components isoflavone and saponin, and the like. Also, the mass ratio of the water to the soybean powder 2 used as the raw materials is preferably in the range of about 10/1 to 2/1, more preferably about 8/1 to 4/1, and most preferably about 6/1.

The coagulant 4 includes, for example, bittern with magnesium chloride as the main component, magnesium chloride, calcium chloride, magnesium sulfate, calcium sulfate, glucono delta lactone, calcium lactate, organic acids, or the like, which are used either singly or in a combination of a plurality thereof. However, bittern is used most preferably from the point of handling, cost and taste. In addition, the amount used relative to the soybean liquid 3 is in the range from 0.01 to 20% by mass, and preferably approximately in the range from 0.2 to 0.7% by mass. It is possible to adjust a time to coagulate the soybean liquid and the hardness of the tofu-like basic food material 5 by controlling the amount used.

The tofu-like basic food material 5 is obtained by coagulating the soybean liquid 3 by using the coagulant 4, and is used as the basic food material for the viscous food containing soybean 1. In addition, it is possible to finish up like fine-grained tofu by adjusting the concentration of the solid part of the soybean liquid 3 and by pouring the tofu-like basic food material 5 to a form. The grapeseed oil 7 is oil extracted from grape seeds. The wine vinegar 8 is fruit vinegar produced by adding acetic bacteria to wine or grape juice after alcohol fermentation, and has not only antibacterial action but also an appetizing effect. Here, the grapeseed oil 7 refers to edible fat and oil of the present invention, the wine vinegar 8 refers to acidulant of the present invention, and the pepper 9 and the mustard 10 refer to spice of the present invention. Further, in addition to the grapeseed oil 7, edible fat and oil include, for example, vegetable oil such as olive oil, palm oil, palm kernel oil, coconut oil, rapeseed oil, soybean oil, corn oil, rice oil (rice bran oil), sunflower oil, safflower oil, sesame oil, cottonseed oil, and the like, and animal oil and fat such as milk fat, beef tallow, lard, fish oil, and the like. Also, the acidulant is not limited to wine vinegar 8, but includes many kinds of fermented vinegar obtained by acetic fermentation of grain products such as rice etc., or fruits as raw materials, synthetic vinegar prepared by diluting acetic acid and adding fermented vinegar to the diluted acetic acid, fruit juice having acidic taste obtained by citrus fruits such as lemon, etc.

Further, the mixing ratio among the tofu-like basic food material 5, the egg yolk 6, the grapeseed oil 7, the wine vinegar 8, the pepper 9, the mustard 10, and the salt 11 is not specifically limited, but can be adjusted with an appropriate selection depending on the desired viscous food containing soybean 1. However, the mixing ratio is preferably in the range of about 50 to 90% by mass of the tofu-like basic food material 5, and about 0.01 to 40% by mass of the grapeseed oil 7, more preferably in the range of about 60 to 90% by mass of the tofu-like basic good material 5 and about 0.01 to 30% by mass of the grapeseed oil 7, and most preferably in the range of 70 to 90% by mass of the tofu-like basic good material 5 and about 0.01 to 20% by mass of the grapeseed oil 7. Thus, the higher the mixing ratio of the tofu-like basic food material 5, the higher the amount of the original soybean components having health-promoting effects included in the viscous food containing soybean 1.

Next, the process for producing the tofu-like basic food material 5 used for obtaining the viscous food containing soybean 1 of the first embodiment will be explained according to Fig. 2. First, the soybean 12 is dried and, after the shell is removed, is ground by using a crusher into powder or grains with the grain size of about 1 to 100 µm, preferably the grain size of about 10 to 20 µm to form the soybean powder 2 (step S1). In this case, a temperature increase due to grinding is observed, causing deterioration of the components contained in the soybean 12 and yellowing. However, degradation can be prevented by generating a cool gas flow. Next, about 12 kg of the generated soybean powder 2 and about 72 liter of water are mixed and stirred to form the soybean liquid 3 (step S2). Then, the resultant soybean liquid 3 is moved to a cooker, and is conditioned at about 70 to 90°C for about 3 to 10 minutes, preferably at about 80°C for about 8 minutes. The soybean liquid is further cooked at about 90 to 110°C for about 3 to 10 minutes, preferably at about 102°C for about 5 minutes (step S3). Then, the cooked soybean liquid 3 is cooled down to about 30 to 70°C, preferably to about 50°C by using a cooling jacket with cold water flowing therein (step S4). Further, the cooled soybean liquid 3 is cooled to about 5 to 10°C, preferably to about 8°C by using a rapid cooler (step S5).

Further, the soybean liquid 3 is divided into about 15 liter each, and the coagulant 4 is added and stirred (step S6). Inaddition, the amount of the coagulant 4 used is preferably 3.3 g/5.5 cc of dilution water for 1 liter of the soybean liquid 3. Also, the material obtained by stirring after adding the coagulant 4 is boiled at about 60 to 100°C for about 30 to 60 minutes, preferably at about 80°C for about 50 minutes (step S7). Then, the boiled material is cooled in a cooling pond for about 30 to 90 minutes, preferably for about 60 minutes to obtain the tofu-like basic food material 5 (step S8) . From this process, about 84 kg of the tofu-like basic food material is produced. Here, step S1 refers to the soybean powder producing step of the present invention, step S2 to step S5 refer to the soybean liquid producing step of the present invention, and step S6 to step S8 refer to the basic food material preparation step of the present invention.

Next, the process for producing the viscous food containing soybean 1 will be explained according to Fig. 3 and Fig. 4. First, as shown in Fig. 3(a), the egg yolk 6 from an egg, a small amount of the pepper 9, and about 5 cc (a teaspoonful) of the mustard 10, and about 2.5 cc (half a teaspoonful) of the salt 11 are mixed and stirred well to form the first mixture 13 (step S9). Also, as shown in Fig. 3(b), about 15 cc (a tablespoonful) of the wine vinegar 8 is mixed with the first mixture 13 while stirring to form the second mixture 14 (step S10). Further, as shown in Fig. 3(c), about 50 cc of the grapeseed oil 7 is mixed a small amount at a time with the second mixture 14 while stirring to form the third mixture 15 having a semi-solid state (step S11). Here, the amount of the grapeseed oil used may be 50 cc or less. Then, as shown in Fig. 3(d), the third mixture 15 is added to about 300 g of the tofu-like basic food material 5 while stirring to form the fourth mixture 16 (step S12). Further, as shown in Fig. 3(e), about 15 cc (a tablespoonful) of the boiled wine vinegar 8 is added to the fourth mixture 16 while stirring to produce the viscous food containing soybean 1 shown in Fig. 3(f) (step S13).

The viscous food containing soybean 1 produced in this manner is made to become a mayonnaise-type food that is an emulsified food consisting of an aqueous phase composed of the tofu-like basic good material 5 containing the components contained in the soybean 12, the egg yolk 6, the wine vinegar 8, the pepper 9, the mustard 10, and the salt 11, and an oil phase composed of the grapeseed oil 7, by making use of the emulsifying function of lecithin contained in the egg yolk 6 or the soybean 12.

Here, steps S9 to S13 refer to the stirring step of Claim 6, wherein step S9 refers to the first stirring step of Claim 7, step S10 refers to the second stirring step of Claim 7, step S11 refers to the third stirring step of Claim 7, step S12 refers to the fourth stirring step of Claim 7, and step S13 refers to the fifth stirring step of Claim 7.

Thus, in the viscous food containing soybean 1 of the first embodiment, a mayonnaise-type food is produced wherein the tofu-like basic food material 5 is the main component with the highest mixing ratio, and the grapeseed oil 7 which has the reduced mixing ratio of a low level. Since common mayonnaise contains a very high mixing ratio of edible fat and oil, as high as 65% to 80%, and also contains egg yolk, the common mayonnaise tends to be avoided by some people as a food with high calorie and high cholesterol contents. Compared to the above case, the viscous food containing soybean 1 of the present embodiment is made to become a food with a very low calorie content by reducing the mixing ratio of the grapeseed oil 7 to a low level while making the tofu-like basic food material 5 as the main component instead, and also it can be used without hesitation as a seasoning by those who pay attention to health, since it has an effect of reducing cholesterol due to proteins, linoleic acid, lecithin, etc. contained in the soybean 12.

Also, in the viscous food containing soybean 1 of the first embodiment, the components of the soybean 12 which are effective in promoting health are exhaustively taken into the soybean liquid 3, and the viscous food containing soybean 1 is processed into a mayonnaise-type food which can be useful as a seasoning of various foods, making dietary life healthy and rich. Specifically, proteins or hydrolysates thereof contained in soybean are effective in reducing cholesterol, preventing cancer, preventing obesity, preventing aging, etc. Also, dietary fiber is effective in improving lipid metabolism, preventing colorectal cancer, improving diabetes, etc. Further, oligosaccharides are effective in increasing Bifidobacteria and thus in improving intestine. In addition, lecithin is effective in improving cardiovascular diseases, improving the brain and nerve system, and reducing cholesterol. Isoflavone has an estrogen effect, and is effective in preventing cancer, preventing osteoporosis, etc. Furthermore, saponin is effective in improving lipid metabolism, antioxidative effect, etc.

In addition, since the viscous food containing soybean 1 of the first embodiment uses crushed soybean powder 2 prepared by grinding the soybean 12 after drying and removing the shell, and water as the raw materials, the tofu-like basic food 5 is produced without generating okara at all that is industrial wastes. Therefore, it is possible to efficiently use, as a food resource, all the components contained in the soybean 12 that are effective in promoting health. Also, it is possible to reduce the treatment cost of okara, and hence it is possible to reduce environmental impacts in the production process.

Furthermore, the viscous food containing soybean 1 of the first embodiment is emulsified by the egg yolk lecithin contained in the egg yolk 6 and by soybean lecithin contained in the tofu-like basic food material 5. Here, since the tofu-like basic food material 5 is the main component of the viscous food containing soybean 1, the lecithin content is increased compared with that of common mayonnaise. In addition, since the mixing ratio of the grapeseed oil 7, that is, the mixing ratio of edible fat and oil is reduced to a low level, the lecithin content relative to edible fat and oil is increased compared with that of common mayonnaise. Therefore, compared with common mayonnaise, emulsification is made more stable, and hence it is possible to retard denaturation against actions like heating, etc.

### The Second Embodiment

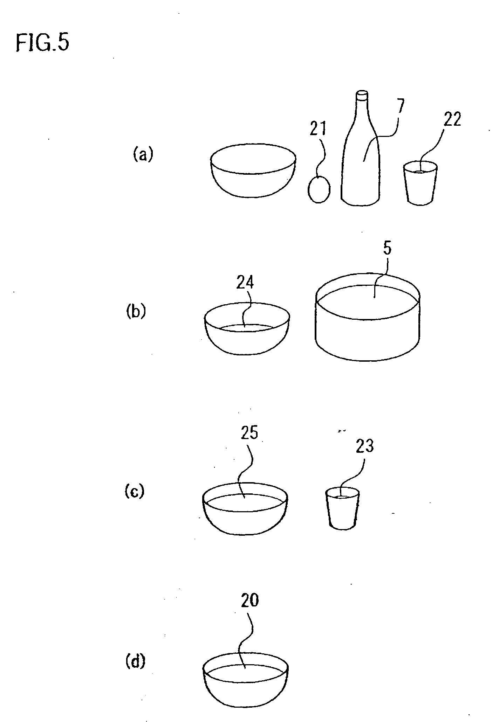

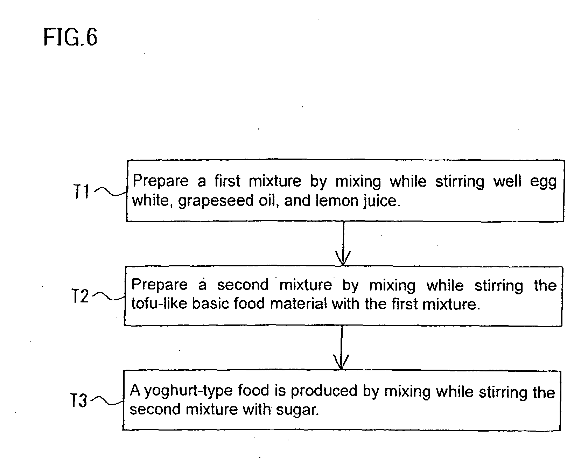

A viscous food containing soybean according to the second embodiment of the present invention will be explained according to Fig. 5 and Fig. 6. Fig. 5 and Fig. 6 are figures explaining a process for producing the viscous food containing soybean according to the second embodiment. The food containing soybean 20 of the present embodiment is produced by mixing egg white 21, grapeseed oil 7, lemon juice 22, and sugar 23, in a predetermined mixing ratio, with a coagulated tofu-like basic food material 5 produced by adding a coagulant 4 to a soybean liquid 3 which is prepared by using water and soybean powder 2. Also, the food containing soybean 20 of the present embodiment is a food which resembles yoghurt produced by fermenting cow milk, etc. by using lactic acid bacteria in taste, appearance, and the purpose of sue. Here, a detailed explanation of the same composition as that of the viscous food containing soybean 1 of the first embodiment is omitted by referring to the same reference numeral as that of the first embodiment.

The lemon juice 22 has an aromatic flavor and is rich in citric acid and vitamin C, and adds a flavor to the viscous food containing soybean 20. The sugar 23 is produced from sugar cane, sugar beet, etc., and adds sweetness to the viscous food containing soybean 20. Here, the lemon juice 22 refers to fruit juice of the present invention, and the sugar 23 refers to saccharides of the present invention. In addition, the fruit juice is not specifically limited to the lemon juice 22, but may be fruit juice obtained from citrus fruits. Also, the saccharides are not specifically limited to the sugar23, but may be hydrolysates thereof, such as glucose or fructose.

In addition, the mixing ratio among the tofu-like basic food material 5, the egg white 21, the grapeseed oil 7, the lemon juice 22, and the sugar 23 is not particularly limited, but may be adjusted with an appropriate selection according to the desired viscous food containing soybean 20. Note, however, that the viscous food containing soybean 20 contains preferably about 50 to 90% by mass of the tofu-like basic food material 5 and about 0.01 to 40% by mass of the grapeseed oil 7, more preferably about 60 to 90% by mass of the tofu-like basic food material 5 and about 0.01 to 30% by mass of the grapeseed oil 7, and most preferably about 70 to 90% by mass of the tofu-like basic food material 5 and about 0.01 to 20% by mass of the grapeseed oil 7. The higher the mixing ratio of the tofu-like basic food material 5, the higher is the content of the original components contained in soybean that are effective in promoting health in the viscous food containing soybean 20.

Next, a process for producing the viscous food containing soybean according to the second embodiment will be explained according to Fig. 5 and Fig. 6. First, as shown in Fig. 5(a), the egg white 21 of an egg, about 50 cc of the grapeseed oil 7, and about 30 cc (two tablespoonfuls) of the lemon juice 22 are mixed while stirring to form the first mixture 24 (step T1). Also, as shown in Fig. 5(b), the first mixture 24 is mixed with about 300 g of the tofu-like basic food 5 while stirring to form the second mixture 25 (step T2). Also, as shown in Fig. 5 (c), the second mixture 25 is mixed with about 2.5 cc (half a teaspoonful) while stirring to form the viscous food containing soybean 20 shown in Fig. 5(d) (step T3).

The viscous food containing soybean 20 produced in this manner is made to become a yoghurt-type food that is an emulsified food consisting of an aqueous phase composed of the tofu-like basic food material 5 containing the components contained in soybean, the egg white 21, the lemon juice 22, and the sugar 23, and an oil phase composed of the grapeseed oil 7, by making use of the emulsifying effect of lecithin contained in the soybean 12.

Here, steps T1 to T3 refer to the stirring step of Claim 6, wherein step T1 refers to the first stirring step of Claim 8, step T2 refers to the second stirring step of Claim 8, and step T3 refers to the third stirring step of Claim 8.

Thus, the viscous food containing soybean 20 of the second embodiment includes the soybean liquid 3 that contains exhaustively the components of the soybean 12 used as the raw material that are effective in promoting health, and further the viscous food containing soybean 20 is processed into a yoghurt-type food which can be eaten as a dessert, making dietary life healthy and rich.

Also, in the viscous food containing soybean 20 of the second embodiment, a yoghurt-type food is produced, wherein the tofu-like basic food material 5 is included as the main component. Common yoghurt uses animal milk such as cow milk, sheep milk, goat milk, or the like as rawmaterials, and is a semi-solidviscous food prepared by fermentation of the raw materials by using lactic acid bacteria. That is, a process for producing yoghurt includes at least a fermentation step wherein the lactic acid bacteria are added to the animal milk to produce lactic acid from lactose contained in the animal milk. Also, since the animal milk such as cow milk, sheep milk, goat milk, or the like used as the raw materials contains comparatively high fraction of lipids, it has the same problem as that of the mayonnaise described above, that is, a food with relatively high calorie and high cholesterol contents. Compared with this case, the viscous food containing soybean 20 of the present embodiment can be produced relatively easily since the production does not include a fermentation step, and also is made to become a food having a very low calorie content since the tofu-like basic food material 5 is used as the main component. At the same time, the viscous food containing soybean 20 of the present embodiment can be eaten as a dessert by people who pay attention to health, since the proteins, linoleic acid, lecithin, etc. contained in the soybean 12 are effective in reducing cholesterol.

### The Third Embodiment

A viscous food containing soybean according to the third embodiment will be explained. The viscous food containing soybean according to the present embodiment is produced by mixing, in a predetermined mixing ratio, egg yolk, grapeseed oil, wine vinegar, apple vinegar, pepper, mustard, salt, sweetener, seasoning, and thickener with a soybean liquid produced by using water and soybean powder. Also, the viscous food containing soybean is a mayonnaise-type food which resembles mayonnaise specified in Japanese Agricultural Standards in flavor, appearance and intended use.

The soybean liquid is prepared by using the soybean powder as the raw material obtained by grinding soybean after drying and removing the shell in the form of powder or grains having a grain size of about 10 to 20 µm. The soybean liquid is produced without generating okara, and is different from soy milk etc. obtained by a conventional process. In addition, the soybean powder has the components substantially the same as those of soybean, and is different from dried soy milk, defatted soybean powder, concentrated soybean proteins,separated soybean proteins, or the like. The grain size of the soybeanpowder is not specifically limited, but preferably in the range of about 1 to 100 µm, and more preferably about 10 to 20 µm. In addition, the mass ratio of the water to the soybean powder used as the raw materials is preferably from about 10/1 to 2/1, more preferably from about 8/1 to 4/1, and most preferably about 6/1.

A sweetener (saccharides) and seasoning (amino acids) are used for adjusting the taste of the viscous food containing soybean. As the sweetener, sugar (granulated sugar, white superior soft sugar, brown sugar, coarse crystal medium soft sugar, and yellow soft sugar), glucose, fructose, mixed liquid sugar, starch syrup, oligosaccharides (these are saccharides having the unit polymerization degree of approximately 2 to 10, and include, for example, isomalto-oligosaccharide, galacto-oligosaccharide, fructo-oligosaccharide, xylo-oligosaccharide, lactosucrose, nigero-oligosaccharide, trehalose, dextrose, lactulose, gentiobiose, raffinose, stachyose, etc.), stevia, honey, and the like, are used either singly or in a combination of a plurality thereof. Also, as the seasoning (amino acids), glycine, alanine, valine, leucine, isoleucine, serine, threonine, cystine, methionine, phenylalanine, tyrosine, tryptophan, proline, asparagine, glutamine, etc., can be use either singly or in a combination of a plurality thereof.

The thickener is used for adjusting the viscosity of the viscous food containing soybean. Specifically, thickener polysaccharides such as carrageenan, xanthan gum, tara gum, gellan gum, pectin, locust bean gum, guar gum, tamarind seed gum, Arabian gum, agar, alginates such as sodium alginate, furcelleran, starch, etherized starch, esterified starch, dextrins, glucomannan, and the like can be used singly or in a combination of a plurality thereof. In addition, the viscosity of the viscous food containing soybean may be adjusted by adjusting the mass ratio of the water to the soybean powder in the soybean liquid, without using the thickener.

Further, the mixing ratio among the soybean liquid, egg yolk, grapeseed oil, wine vinegar, apple vinegar, pepper, mustard, salt, sweetener, seasoning, and thickener is not specifically limited, but can be adjusted with an appropriate selection depending on the desired viscous food containing soybean. For example, the viscous food containing soybean contains preferably about 50 to 90% by mass of the soybean liquid and about 0.01 to 40% by mass of the grapeseed oil, more preferably about 60 to 90% by mass of the soybean liquid and about 0.01 to 30% by mass of the grapeseed oil, or most preferably about 70 to 90% by mass of the soybean liquid and about 0.01 to 20% by mass of the grapeseed oil. The higher the mixing ratio of the soybean liquid, the higher are the original soybean components that are effective in promoting health in the viscous food containing soybean. Here, the grapeseed oil refers to edible fat and oil of the present invention, wine vinegar and apple vinegar refer to acidulant of the present invention, and pepper and mustard refer to spice of the present invention.

Here, in the case where the weight of the viscous food containing soybean according to the third embodiment is about 369 g, an example of the mixing ratio among the soybean powder, water, egg yolk, grapeseed oil, wine vinegar, apple vinegar, pepper, mustard, salt, sweetener, seasoning, and thickener is shown below. That is, an example with the following mixing ratio is prepared: 32 g (8.7%) of soybean powder, 200 g (54.2%) of water, 9 g (2.4%) of thickener, 8 g (2.2%) of salt, 33 g (8.9%) of egg yolk, 0.2 g (0.1%) of pepper, 14 g (3.8%) of mustard, 22 g (6.0%) of apple vinegar, 24 g (6.5%) of grapeseedoil, 11g (3.0%) ofwinevinegar, 15g (4.1%) of sweetener, and 0.2 g (0.1%) of seasoning.

Next, a process for producing the viscous food containing soybean according to the third embodiment will be explained. A process for producing the soybean liquid is the same as that of the steps S1 to S5 in the process for producing the tofu-like basic food material 5 used for producing the viscous food containing soybean 1 according to the first embodiment. Then, the thickener (9 g) is added to the soybean liquid (232 g) while mixing to obtain the basic food material (step E1). Then, egg yolk (33 g), pepper (0.3 g), mustard (14 g), and salt (8 g) are mixed while stirring to obtain the first mixture (step E2). Next, a mixed vinegar (17 g) prepared by combining wine vinegar and apple vinegar is added to the first mixture while stirring to produce the second mixture (step E3). Next, grapeseed oil (24 g) is added a small amount at a time to the second mixture while stirring to obtain the semi-solid third mixture (step E4). Further, the third mixture is mixed with the basic food material while stirring to form the fourth mixture (step E5). Then, vinegar (16 g) prepared by combining boiled wine vinegar and apple vinegar is mixed with the fourth mixture while stirring to obtain the fifth mixture (step E6). Further, a sweetener (15 g) and a seasoning (0.2 g) are mixed while mixing with the fifth mixture to obtain the viscous food containing soybean (step E7).

The viscous food containing soybean produced in this manner is made to become a mayonnaise-type food that is an emulsified food consisting of an aqueous phase composed of the soybean liquid containing the components contained in soybean, egg yolk, wine vinegar, apple vinegar, pepper, mustard, salt, seasoning, sweetener, and thickener, and an oil phase composed of grapeseed oil, by making use of the emulsifying function of lecithin contained in egg yolk or soybean.

Here, the steps E1 to E7 refer to the stirring step of Claim 9.

Thus, in the viscous food containing soybean according to the third embodiment, it is possible to save labor for producing the tofu-like basic good material by coagulating the soybean liquid. Also, since the soybean liquid contains the components of soybean exhaustively, it contains more lecithin compared to conventional soy milk, etc., resulting in the increase in nutritive value, and simultaneously in enhancing the emulsifying function.

Also, the viscous food containing soybean according to the third embodiment is emulsified by the egg yolk lecithin contained in egg yolk and by soybean lecithin contained in soybean liquid. In this case, the soybean liquid is the main component of the viscous food containing soybean, and as a result, the amount of lecithin is increased compared with that in common mayonnaise. Also, since the mixing ratio of the grapeseed oil that is edible fat and oil is reduced at a low level, the lecithin content relative to edible fat and oil is increased compared with that of common mayonnaise. Therefore, compared with common mayonnaise, emulsification is made more stable, and hence it is possible to retard denaturation against actions like heating, etc.

### The Fourth Embodiment

A viscous food containing soybean according to the fourth embodiment will be explained. The viscous food containing soybean according to the present embodiment is produced by mixing, in a predetermined mixing ratio, egg white, grapeseed oil, lemon juice, sugar, thickener, a mixture of wine vinegar and lemon juice, sweetener, and seasoning with a soybean liquid prepared by using water and soybean powder. Also, the present viscous food containing soybean is a food of which flavor, appearance and intended use are similar to those of yoghurt prepared by fermenting cow milk, etc. by using lactic acid bacteria.

The soybean liquid, thickener, sweetener, and seasoning can be selected from those similar to the case of the viscous food containing soybean according to the third embodiment. In addition, the mixing ratio among the soybean liquid, egg white, grapeseed oil, lemon juice, sugar, thickener, mixture of wine vinegar and lemon juice, sweetener, and seasoning is not specifically limited, but can be adjusted with an appropriate selection depending on the desired viscous food containing soybean. However, the viscous food containing soybean contains preferably about 50 to 90% by mass of the soybean liquid and about 0.01 to 40% by mass of the grapeseed oil, more preferably about 60 to 90% by mass of the soybean liquid and about 0.01 to 30% by mass of the grapeseed oil, and most preferably about 70 to 90% by mass of the soybean liquid and about 0.01 to 20% by mass of the grapeseed oil. The higher the mixing ratio of the soybean liquid, the higher are the original soybean components that are effective in promoting health in the viscous food containing soybean. Here, the grapeseed oil refers to edible fat and oil of the present invention, lemon juice refers to fruit juice of the present invention, and the sugar refers to saccharides of the present invention.

Here, in the case where the weight of the viscous food containing soybean according to the fourth embodiment is about 357 g, an example of the mixing ratio among the soybean powder, water, egg white, grapeseed oil, lemon juice, sugar, thickener, mixture of wine vinegar and lemon juice, sweetener, and seasoning is shown below. That is, an example with the following mixing ratio is prepared: 32 g (9.0%) of soybean powder, 200 g (56.0%) of water, 9 g (2.5%) of thickener, 38 g (10.6%) of egg white, 29 g (8.1%) of lemon juice, 21 g (5.9%) of grapeseed oil, 12 g (3.4%) of the mixture of wine vinegar and lemon juice, 2 g (0.5%) of sugar, 14 g (3.9%) of sweetener, and 0.2 g (0.1%) of seasoning.

Next, a process for producing the viscous food containing soybean according to the fourth embodiment will be explained. The process for producing the soybean liquid is the same as that of steps S1 to S5 in the process for producing the tofu-like basic food material 5 used for producing the viscous food containing soybean 1 according to the first embodiment. Then, the thickener (9 g) is mixed with the soybean liquid (232 g) while stirring to obtain the basic food material (step F1). Then, egg white (38 g), grapeseed oil (21 g), and lemon juice (29 g) are mixed while stirring to obtain the first mixture (step F2). Next, the first mixture is mixed with the basic food material while stirring to produce the second mixture (step F3). Then, the mixture (12 g) of wine vinegar and lemon juice is mixed with the second mixture while stirring to form the third mixture (step F4). Further, sugar (2 g), sweetener (14 g), and seasoning (0.2 g) are added to the third mixture while stirring to produce the viscous food containing soybean (step F5).

The viscous food containing soybean produced in this manner is made to become a yoghurt-type food that is an emulsified food consisting of an aqueous phase composed of the soybean liquid containing the components contained in soybean, egg white, lemon juice, sugar, thickener, mixture of wine vinegar and lemon juice, sweetener, and seasoning, and an oil phase composed of grapeseed oil, by making use of the emulsifying function of lecithin contained in soybean.

Here, steps F1 to F5 refer to the stirring step of Claim 9.

Thus, in the viscous food containing soybean according to the fourth embodiment, it is possible to save labor for producing the tofu-like basic food material by coagulating the soybean liquid. Also, since the soybean liquid contains the soybean components exhaustively, it contains more lecithin compared to conventional soy milk etc., resulting in the increase in nutritive value, and simultaneously in enhancing the emulsifying function.

As described above, the four preferable embodiments according to the present invention were explained. However, the present invention is not limited to these embodiments. As shown in the following, it is possible to make various improvements and changes in design within the scope and spirit of the present invention.

That is, in the viscous foods 1 and 20 containing soybean according to the first and the second embodiments, the soybean liquid 3 that is the raw material for the tofu-like basic food material 5 is processed without removing lipids, dietary fiber, saccharides, vitamins, minerals, etc. contained in soybean, in addition to soybean proteins. However, the soybean liquid 3 is not limited to the above, but may be any liquid which contains soybean proteins or hydrolysates thereof.

Also, in the viscous foods 1 and 20 containing soybean according to the first and the second embodiments, the tofu-like basic food material 5 produced by using water and soybean powder 2 is shown as an example. However, these tofu-like basic food materials are not limited to this example, but can also be produced by using various commercially available tofu such as rough-grained tofu, fine-grained tofu, packed tofu, or the like.

Further, in the viscous foods 1 and 20 containing soybean according to the first and the second embodiments, an example is shown wherein the viscous food containing soybean is produced first by producing the tofu-like basic food material 5 by coagulating the soybean liquid 3 with the addition of the coagulant 4, and then bymixingwhile stirringvarious food materials such as egg, grapeseed oil 7 and the like with the tofu-like basic material 5. However, these viscous foods containing soybean are not limited to this example, but can also be produced by first mixing while stirring the soybean liquid 3 and various food materials, and then adding the coagulant 4 to coagulate the resultant mixture.

In addition, in the viscous food containing soybean 1 according to the first and the third embodiments, an example using egg yolk 6 is shown, and in the viscous food containing soybean 20 according to the second and the fourth embodiments, an example using egg white 21 is shown. However, the viscous foods containing soybean are not limited to these examples, but can be produced by using whole egg.

Also, a thickener similar to that added to the viscous food containing soybean according to the third embodiment can be added to the viscous foods containing soybean 1 and 20 according to the first and the third embodiments. The thickener may be added at the time of producing the tofu-like basic food material 5, or may be added to the first mixture 13 or 24 at the time of producing the viscous food containing soybean 1 and 20. By the addition of the thickener, it is possible to increase the viscosity of the viscous foods containing soybean 1 and 20.

Furthermore, a sweetener or a seasoning similar to that added to the viscous food containing soybean according to the third embodiment may be added to the viscous foods 1 and 20 containing soybean according to the first and the second embodiments. For the viscous food containing soybean 1 according to the first embodiment, the sweetener or the seasoning is added preferably at the time of producing the viscous food containing soybean 1 to a mixture formed by mixing while stirring the boiled wine vinegar 8 with the fourth mixture 16. For the viscous food containing soybean 20 according to the second embodiment, the sweetener or the seasoning is added preferably at the time of producing the viscous food containing soybean 20 to a mixture formed by mixing the second mixture 25 while stirring with about 2.5 cc (half a teaspoonful) of the sugar 23.

In addition, an emulsifier may be added to the viscous foods containing soybean 1 and 20 according to the first to the fourth embodiments. Examples of emulsifiers include, for example, lecithin, monoglyceride of fatty acid, polyglyceride of fatty acid, sucrose fatty acid ester, sorbitan fatty acid ester, and the like.

### INDUSTRIAL APPLICABILITY

As described above, the viscous food containing soybean according to the present invention, which contains at least proteins or hydrolysates thereof contained in soybean, is effective in reducing cholesterol, preventing cancer, preventing obesity, preventing aging, etc., and can make dietary life healthy and rich.

Also, the viscous food containing soybean according to the present invention is made to become a food with a very low calorie content by reducing the mixing ratio of edible fat and oil to a low level while making the tofu-like basic food material as the main component instead, and also it can be used without hesitation as a seasoning by those who pay attention to health and can make dietary life healthy and rich, since it is effective in reducing cholesterol due to proteins or hydrolysates thereof contained in soybean.

Further, the viscous food containing soybean according to the present invention is made to become a food with a very low calorie content by reducing the mixing ratio of edible fat and oil to a low level while making the tofu-like basic food material as the main component instead, and also it can be used without hesitation as a dessert by those who pay attention to health and can make dietary life healthy and rich, since it is effective in reducing cholesterol due to proteins or hydrolysates thereof contained in soybean.

In addition, the viscous food containing soybean according to the present invention, which contains at least proteins or hydrolysates thereof contained in soybean, is effective in reducing cholesterol, preventing cancer, preventing obesity, preventing aging, etc. , and can make dietary life healthy and rich. Also, the soybean components that are effective in promoting health are exhaustively contained in the viscous food containing soybean, which can make dietary life healthy and rich.

Furthermore, the tofu-like basic food material according to the present invention used in the viscous food containing soybean contains exhaustively the soybean components that are effective in promoting health, and can make dietary life healthy and rich. For example, dietary fiber is effective in improving lipid metabolism, preventing colorectal cancer, improving diabetes, etc. Oligosaccharides are effective in increasing Bifidobacteria and thus in improving intestine. Lecithin is effective in improving cardiovascular diseases, improving the brain and nerve system, and reducing cholesterol. Isoflavone has an estrogen effect, and is effective in preventing cancer, preventing osteoporosis, etc. Saponin is effective in improving lipid metabolism, antioxidative effect, etc. Also, since okara is not generated, soybean used as the raw material can be utilized efficiently as a food resource without being wasted.

Additionally, the process for producing the viscous food containing soybean according to the present invention, wherein the viscous food containing soybean contains the proteins or the hydrolysates thereof contained in soybean, can produce a food which is effective in reducing cholesterol, preventing cancer, preventing obesity, preventing aging, etc.

Also, the process for producing the viscous food containing soybean according to the present invention can produce a mayonnaise-type food which can be used without hesitation as a seasoning of various foods by those who pay attention to health, since it is effective in reducing cholesterol due to proteins or hydrolysates thereof contained in soybean, wherein the viscous food containing soybean is produced with a very low calorie content by reducing the mixing ratio of edible fat and oil to a low level while making the tofu-like basic food material as the main component instead.

Further, the process for producing the viscous food containing soybean according to the present invention can produce a viscous food containing soybean relatively easily compared to the conventional process for producing yoghurt, wherein the process for producing the yoghurt includes a fermentation step to produce lactic acid from lactose contained in animal milk by adding lactic acid bacteria to the animal milk.

In addition, the process for producing the viscous food containing soybean according to the present invention can produce a food which is effective in reducing cholesterol, preventing cancer, preventing obesity, preventing aging, etc., since it contains proteins or hydrolysates thereof or the like contained in soybean, etc. Also, the process can save the labor of coagulating a soybean liquid.

Also, the process for producing the tofu-like basic food material according to the present invention can produce a basic food material which contains exhaustively the soybean components effective for promoting health, and can be used as a raw material for a viscous food containing soybean. In addition, the process can not only suppress the cost for treating okara since okara as industrial wastes is not generated at all, and also does not cause environmental impacts.

## Claims

1. A viscous food containing soybean produced by mixing, in a predetermined mixing ratio, a tofu-like basic food material made of raw materials composed of at least water and soybean with at least egg and edible fat and oil.

2. A viscous food containing soybean produced by mixing, in a predetermined mixing ratio, a tofu-like basic food material made of raw materials composed of at least water and soybean with egg yolk, edible fat and oil, acidulant, spice, and salt.

3. A viscous food containing soybean produced by mixing, in a predetermined mixing ratio, a tofu-like basic food material made of raw materials composed of at least water and soybean with egg white, edible fat and oil, fruit juice, and saccharide.

4. A viscous food containing soybean produced by mixing, in a predetermined mixing ratio, a soybean liquid with at least egg and edible fat and oil, wherein the soybean liquid is prepared by stirring soybean powder obtained by grinding soybean into powder after drying and removing the shell in water.

5. A tofu-like basic food material for producing a viscous food containing soybean, wherein the tofu-like basic food material is produced by using soybean powder and water as raw materials, wherein the soybean powder is obtained by grinding soybean into powder after drying and removing the shell.

6. A process for producing a viscous food containing soybean, the process comprising: a soybean liquid producing step, wherein the soybean liquid is produced by using at least water and soybean; a basic food material producing step, wherein a tofu-like basic food material is produced by coagulating the soybean liquid with the addition of a coagulant; and a stirring step, wherein at least egg and edible fat and oil are mixed while stirring with the tofu-like basic food material in a predetermined mixing ratio.

7. A process for producing a viscous food containing soybean, the process comprising: a soybean liquid producing step, wherein the soybean liquid is produced by using at least water and soybean; a basic food material producing step, wherein a tofu-like basic food material is produced by coagulating the soybean liquid with the addition of a coagulant; a first stirring step, wherein a first mixture is produced by mixing while stirring egg yolk, spice and salt in a predetermined mixing ratio; a second stirring step, wherein a second mixture is produced by mixing while stirring an acidulant with the first mixture in a predetermined mixing ratio; a third stirring step, wherein a third mixture having a semi-solid-like state is produced by mixing while stirring edible fat and oil by a small amount at a time with the second mixture in a predetermined mixing ratio; a fourth stirring step, wherein a fourth mixture is produced by mixing while stirring the third mixture with the tofu-like basic food material in a predetermined mixing ratio; and a fifth stirring step, wherein a mayonnaise-type food is produced by mixing while stirring a boiled acidulant with the fourth mixture in a predetermined mixing ratio.

8. A process for producing a viscous food containing soybean, the process comprising: a soybean liquid producing step, wherein a soybean liquid is produced by using at least water and soybean; a basic food material producing step, wherein a tofu-like basic food material is produced by coagulating the soybean liquid with the addition of a coagulant; a first stirring step, wherein a first mixture is produced by mixing while stirring egg white, edible fat and oil, and fruit juice in a predetermined mixing ratio; a second stirring step, wherein a second mixture is produced by mixing while stirring the first mixture with the tofu-like basic food in a predetermined mixing ratio; and a third stirring step, wherein a yoghurt-type food is produced by mixing while stirring saccharide with the second mixture in a predetermined mixing ratio.

9. A process for producing a viscous food containing soybean, the process comprising: a soybean powder producing step, wherein a soybean powder is produced by grinding soybean after drying and removing the shell; a soybean liquid producing step, wherein a soybean liquid is produced by using at least water and the soybean powder; and a stirring step, wherein at least egg and edible fat and oil are mixed while stirring with the soybean liquid in a predetermined mixing ratio.

10. A process for producing a tofu-like basic food material which is used for producing a viscous food containing soybean, the process comprising: a soybean powder producing step wherein a soybean powder is produced by grinding soybean after drying and removing the shell; a soybean liquid producing step, wherein a soybean liquid is produced by using water and soybean powder; and a basic food material producing step, wherein a tofu-like basic food is produced by coagulating the soybean liquid by adding a coagulant to the soybean liquid.
